# EUROPÄISCHE PATENTSCHRIFT

(11) **EP 2 851 245 B1**
(45) Veröffentlichungstag und Bekanntmachung des Hinweises auf die Patenterteilung: **29.06.2016**
(21) Anmeldenummer: 14184936.4
(22) Anmeldetag: 16.09.2014
(51) Int. Cl.: B60R 25/021, B60R 25/20

(54) **Mechanische Lenkungsverriegelung für Fahrzeuge**
Mechanical steering lock for vehicles
Verrouillage de direction mécanique pour véhicules

(30) Priorität: 19.09.2013 DE 102013015629; 08.11.2013 DE 102013018835
(43) Veröffentlichungstag der Anmeldung: 25.03.2015
(73) Patentinhaber: Huf Hülsbeck & Fürst GmbH & Co. KG, 42551 Velbert (DE)
(72) Erfinder: Pieper, Friedrich, 84513 Töging (DE)
(74) Vertreter: Henkel, Breuer & Partner

(56) Entgegenhaltungen:
- EP-A2- 2 420 416
- DE-A1-102008 014 636
- DE-A1-102010 038 160
- FR-A1- 2 573 465
- FR-A1- 2 909 952
- JP-A- 2002 371 735
- JP-A- 2006 248 520

## Beschreibung

Die Erfindung betrifft eine mechanische Lenkungsverriegelung für Fahrzeuge.

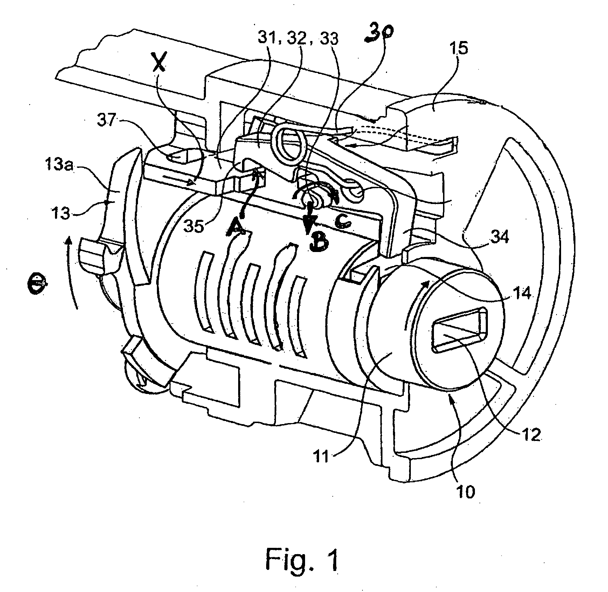

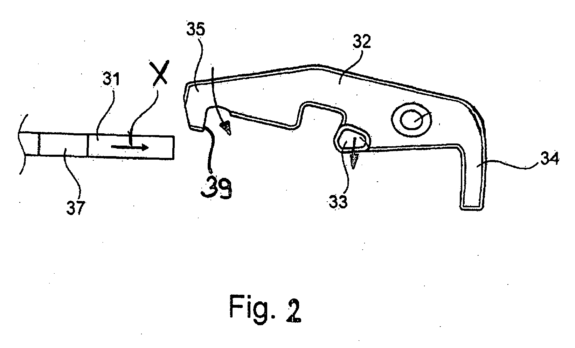

Eine mechanische Lenkungsverriegelung ist beispielsweise aus der DE102010038160 A1 bekannt und in den Figuren 1 und 2 dargestellt, wobei die Fig. 1 eine teilweise freigeschnittene Detailansicht der Lenkungsverrieglung mit einem Gehäuse 15, einem darin aufgenommenen Schließzylinder 10 sowie wesentlichen Elementen eines später noch detailliert beschriebenen Sicherungsmechanismus für einen (nicht gezeigten) Verriegelungsbolzen, und die Fig. 2 isoliert Elemente des Sicherungsmechanismus darstellt. Derartige Lenkungsverriegelungen besitzen typischerweise den Schließzylinder 10 mit einem Schlüsselkanal 12, in den ein (nicht dargestellter) Schlüssel einsetzbar ist, um den Schließzylinder 10 freizugeben. Im freigegebenen Zustand kann ein Zylinderkern 11 mittels des Schlüssels von einer Ausgangs- oder Schließstellung um definierte Drehwinkelbereiche in mindestens zwei definierte aufeinanderfolgende Betriebsstellungen gedreht werden, die durch spürbare Raststellungen definiert sind. Die erste Betriebsstellung wird auch als "ACC"-Stellung (von "accumulator") bezeichnet. In dieser Stellung erfolgt die Stromversorgung ausgewählter Aggregate des Fahrzeugs (z.B. Gebläse, Radio, Fensterheber, Stellmotoren für Sitzverstellung etc.) nur aus der Starterbatterie. Die erste Stellung wird typischerweise nach einem definierten ersten Drehwinkelbereich des Schlüssels und damit des Zylinderkerns 11 um ca. 60° erreicht, wobei der ACC-Kontakt aus gründen der Fertigungstoleranz und der sicheren Einstellung der Schaltposition bereits kurz vor Erreichen der Raststellung hergestellt wird. Der ACC-Kontakt bleibt ab dieser Stellung über die nächste Raststellung hinaus geschlossen.

In der zweiten Betriebsstellung, die nach einem Weiterdrehen des Zylinderkerns 11 um einen definierten zweiten Drehwinkelbereich von ca. 30° erreicht ist (insgesamt also ca. 90° von der Ausgangsstellung), ist die Spannungsversorgung von Zündung und Motor-Verbrauchern (z.B. Freigabe der Kraftstoffzufuhr) hergestellt. Diese Stellung wird auch als "Normalbetriebsstellung" oder "IGN"-Stellung (von "ignition") bezeichnet. Auch hier wird der IGN-Kontakt aus Gründen der Fertigungstoleranz und der sicheren Einstellung der Schaltposition bereits kurz vor Erreichen der Raststellung der zweiten Betriebsstellung hergestellt und er bleibt ab dieser Stellung ggf. auch bis zur Start-Stellung des Schlüssels bzw. Zylinderkerns hinaus geschlossen, wenn diese wie im Folgenden beschrieben vorhanden ist.

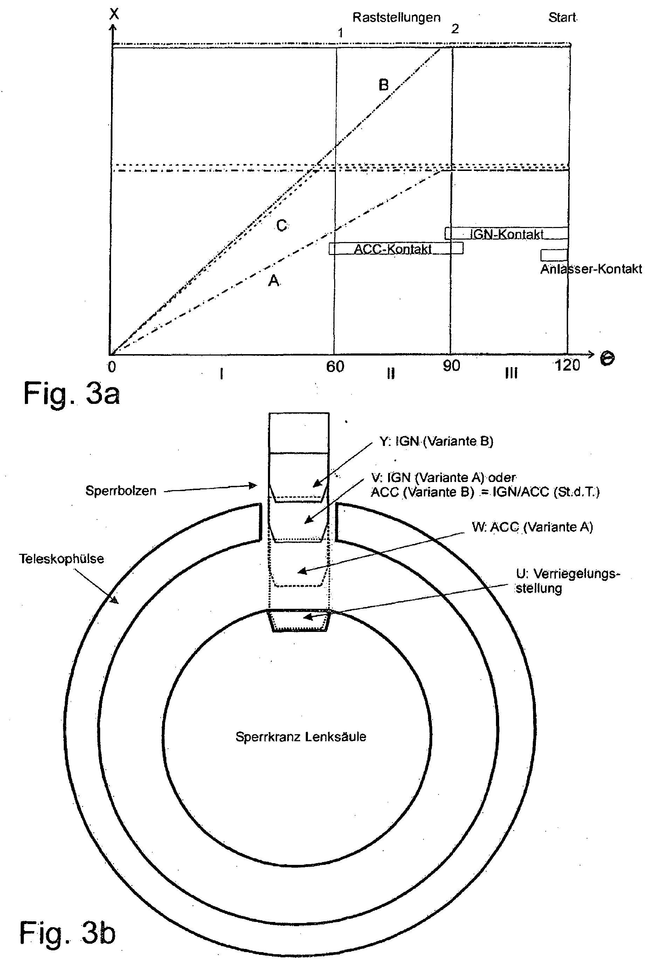

An die zweite Betriebsstellung kann sich diese dritte Betriebsstellung anschließen, in der der Anlasser bei Herstellung eines Anlasser-Kontakts betätigt wird und die durch eine. Weiterdrehung des Zylinderkerns 11 mittels des Schlüssels um einen Drehwinkelbereich von weiteren ca. 30° von der zweiten Betriebsstellung gegen eine Federbelastung erreicht wird. Die Federbelastung führt den Zylinderkern 11 nach dem Loslassen des Schlüssels und dem Starten des Motors wieder in die "Normalbetriebsstellung" zurück. An Stelle dieser dritten Betriebsstellung des Schließzylinders 10 kann eine separate Anlassertaste vorgesehen sein, mit der das Starten des Motors durch Herstellung eines Anlasser-Kontakts ausgelöst wird. Die Abfolge der Schlüsselstellungen und der Drehbereich sowie die beschriebenen typischen Kontakte sind auch in der Darstellung der Fig. 3a angegeben, wobei die Kurve C dem typischen Bewegungsablauf im Stand der Technik entspricht.

Bei der Drehung des Schließzylihders bzw. des Zylinderkerns von der Ausgangs- oder Verriegelungsstellung in die erste Betriebsstellung wird gleichzeitig der mechanische Verriegelungsbolzen (in Fig. 3b schematisch dargestellt), der in der Lenkungsverriegelung beweglich gelagert ist, von einer ersten Stellung (Verriegelungsstellung), in der er in eine von mehreren Ausnehmungen am Umfang eines Sperrkranzes (in Fig. 3b ist nur eine solche Ausnehmung gezeigt), der mit einer Lenksäule des Fahrzeugs gekoppelt ist, eingerückt ist und dadurch deren Drehung verhindert, in eine zweite Stellung bewegt, in der er vollständig aus der Ausnehmung des Sperrkranzes in eine Freigabestellung ausgerückt ist, in der er die Lenkungsbetätigung freigibt. Dazu ist der Verriegelungsbolzen mechanisch mit dem Zylinderkern des Schließzylinders gekoppelt, beispielsweise über ein Steuerelement 13 mit einer .Steuer- oder Hubkurve 13a, die mit einem Mitnehmer des Verriegelungsbolzens in Eingriff ist, so dass eine Drehung um einen Drehwinkel Θ des Schließzylinders bzw. des Zylinderkerns 11 auf das Steuerelement 13 übertragen wird und die Drehung der Steuerkurve 13a über den Mitnehmer eine translatorische Bewegung des Verriegelungsbolzens erzeugt. Damit bewirkt die Drehung des Schließzylinders bzw. Zylinderkerns in die erste Betriebsstellung die translatorische Bewegung des Verriegelungsbolzens von der Verriegelungsstellung in die ausgerückte oder Freigabestellung.

Die mechanische Lenkungsverriegelung besitzt sodann eine Sicherungseinrichtung, die sowohl dem Schließzylinder als auch dem Verriegelungsbolzen mechanisch zugeordnet ist und ein Sicherungselement aufweist, das in der Lenkungsverriegelung zwischen einer deaktivierten Stellung oder Freigabestellung und einer aktivierten Stellung oder Sicherungsstellung beweglich gelagert ist. In der deaktivierten Stellung hat das Sicherungselement keinen Einfluss auf den Verriegelungsbolzen und dessen Bewegung. In der aktivierten Stellung oder Sicherungsstellung ist das Sicherungselement in einem mechanischen Eingriff mit dem Verriegelungsbolzen oder einer Verlängerung desselben und verhindert eine Rückbewegung des Verriegelungsbolzens in dessen erste Stellung oder Verriegelungsstellung, solange sich der Schlüssel in dem Schlüsselkanal befindet. Diese mechanische Sicherung des Verriegelungsbolzens durch das Sicherungselement soll ein unbeabsichtigtes Einrücken des Verriegelungsbolzens in eine Ausnehmung des Sperrkranzes während der Fahrt verhindern.

Bei der in der DE102010038160 A1 beschriebenen Ausgestaltung der Sicherungseinrichtung, die in Fig. 1 und 2 dargestellt ist, umfasst diese ein als beweglicher Schieber ausgestaltetes Erkennungselement 14, das am Schlüsselkanal 12 zwischen einer eingefahrenen Stellung (wie dargestellt), wenn sich kein Schlüssel in dem Schlüsselkanal befindet, und einer ausgefahrenen Stellung bewegbar ist, indem der Schlüssel in den Schlüsselkanal eingeführt wird. Das Sicherungselement ist als Schwenkhebel 32 aufgeführt, der an einer Führungsachse 33, deren Zapfen beidseitig in länglichen Führungen geführt sind, bewegbar gelagert und durch eine Vorbelastungsfeder 30 in die in Fig. 1 gezeigte desaktivierte Stellung oder Freigabestellung gezwungen wird. Die Vorbelastungsfeder 30 übt dazu eine Vorbelastung auf den Schwenkhebel 32 so aus, dass dieser einerseits insgesamt in einer Richtung B zu dem Schließzylinder bzw. gegen ein Koppelelement 31, das als eine mechanische Verlängerung des Verriegelungsbolzens dient, als auch in Richtung einer Drehung C (hier im Uhrzeigersinn) um die Zapfen der Führungsachse 33 vorbelastet ist.. Der durch die Vorbelastung in Richtung B an dem Koppelelement 31 anliegende Schwenkhebel 32 schwenkt dabei um eine Kontaktlinie A am Köppelelemen.t und ist ansonsten an den Zapfen der Führungsachse 33 geführt. Beim Einführen des Schlüssels in den Schlüsselkanal 12 wird das in den Schlusselkanal vorstehende Erkennungselement 14 in die ausgefahrene Stellung verschoben und gelangt dabei in Eingriff mit einem hakenartigen Ende 34 des Schwenkhebels 32, so dass der Schwenkhebel 32 entgegen der Vorbelastungskraft der Feder 30 in der Gegenuhrzeigerrichtung (entgegen der Richtung C) um die Kontaktlinie A an dem Koppelelement 31 unter Führung an der Führungsachse 33 aus der Freigabestellung in die aktivierte Stellung oder Sicherungsstellung verschwenkt wird. Durch die permanente Vorbelastung in Richtung B sowie die erzwungene Schwenkung durch das Einführen des Schlüssels kann das entgegengesetzte hakenartige Ende 35 des Schwenkhebels 32 mit einer Ausnehmung 37 in Eingriff gelangen, die in dem länglichen Koppelelement 31 ausgebildet ist. Der Eingriff einer Eingriffsfläche 39 des hakenartigen Endes 35 des Schwenkhebels 32 in die Ausnehmung 37 bildet eine Arretierungsstufe des Verriegelungsbolzens mit der Sicherungseinrichtung. Diese Arretierungsstufe wird aber erst dann eingenommen, wenn der Verriegelungsbolzen bzw. mit diesem das Koppelelement 31 durch die mechanische Koppelung mit der Hub- oder Steuerkurve 13a durch Drehen des Schließzylinders 10 von der Ausgangsstellung in die erste Betriebsstellung von seiner ersten Stellung (d.h. die Verriegelungsstellung, in der er in eine Ausnehmung in dem Sperrkranz eingerückt ist) in der Richtung X in eine zweite Stellung (in der er sich in der vollständig ausgerückten oder Freigabestellung befindet) bewegt wurde.

Bei dieser Art einer mechanischen Lenkungsverriegelungen für Fahrzeuge besteht eine Schwierigkeit dahingehend, dass insbesondere bei großen Fahrzeugen mit einem dicken und stabilen Lenksäulenrohr und solchen, die eine Teleskoplenksäule besitzen, bei der mehrere Rohrsegmente des Säulenträgers zur Längsverstellung oder als passiver Aufprall-Unfallschutz teleskopartig in Längsrichtung ineinandergeschoben sind, die Rückzug-Wegstrecke des Verriegelungsbolzens von der Verriegelungsstellung im Eingriff mit der Ausnehmung in dem Sperrkranz in die vollständig aus den beweglichen Teilen der Lenksäule ausgerückte oder Freigabestellung relativ lang ist.

Um dieses Problem zu lösen weist das Steuerelement im Stand der Technik eine relativ steile Steuerkurve auf, damit eine solche lange Hubbewegung des Verriegelungsbolzens innerhalb des begrenzten Drehbereichs des Schließzylinders bzw. des Zylinderkerns von ca. 60° beim Entriegeln und Drehen von der Schließstellung in die erste Betriebsstellung (oder "ACC"**-**Stellung) erreicht werden kann (die Zuordnung zwischen Drehung des Schließzylinders und Hub- oder Bewegungsstrecke des Verriegelungsbolzen im Stand der Technik entspricht der Kurve C in Fig. 3a; die Verriegelungsstellung des Verriegelungsbolzens ist die Position "U" in Fig. 3b und die ausgerückte Stellung oder Freigabestellung des Verriegelungsbolzens im Stand der Technik ist die Position "V"). Die steile Steuerkurve erhöht zwangsläufig das zum Drehen erforderliche Moment, was zu einem verminderten Komfortgefühl führt, weil dieses Moment bei der mechanischen Lenkungsverriegelung über den Schlüssel von Hand aufzubringen ist.

Um die erforderliche Rückzug-Wegstrecke des Verriegelungsbolzens bei einer Teleskoplenksäule zu begrenzen, wurde(n) alternativ eines oder mehrere der äußeren teleskopierbaren Rohrsegmente der Lenksäule in Längsrichtung geschlitzt, damit der Verriegelungsbolzen nicht ganz aus dem oder den Rohrsegment(en) herausgezogen werden muss und dennoch eine Längsbewegung der Lenksäulen-Rohrsegmente bei der Längsverstellung oder einer Stauchung bei Frontalaufprall möglich ist. Durch den Schlitz in Längsrichtung wird aber die Festigkeit des jeweiligen Rohrsegments und damit die der gesamten Teleskoplenksäule erheblich geschwächt.

Aus der DE102008014636 A1 ist eine weitere mechanische Lenkradschlossverriegelung für Fahrzeuge bekannt, die einen Schließzylinder mit einem Schlüsselkanal besitzt, in den in einer Schließstellung ein Schlüssel einsetzbar ist, um den Schließzylinder freizugeben und nach der Freigabe von der Schließ- oder Sperrstellung der Reihe nach in eine ACC-Stellung, eine Ein- bzw. Fahrstellung und eine Start-Stellung zu drehen. Ein Sperrbolzen ist in der Lenkradschlossverriegelung beweglich gelagert und wird über einen Schieber, der mit aufeinanderfolgenden Nockenoberflächen eines gleichzeitig mit dem Schließzylinder gedrehten Nockenelements in Eingriff ist, gegen die Kraft einer Sperrbolzenvorspannfeder translatorisch bewegt und aus einer Eingriffsvertiefung der Lenkradachse ganz in den Lenkradschlosskörper zurückgezogen.

Die Erfindung bezweckt die Lösung zumindest einiger dieser Probleme und es ist die Aufgabe der Erfindung, eine sichere mechanische Lenkungsverriegelung für Fahrzeuge in Vorschlag zu bringen, deren Komfortgefühl beim Entriegeln und/oder deren Festigkeit auch bei Verwendung mit einer Teleskoplenksäule verbessert ist.

Zur Lösung bringt die Erfindung eine mechanische Lenkungsverriegelung für Fahrzeuge mit den Merkmalen des Patentanspruches 1 in Vorschlag. Bevorzugte Ausgestaltungen sind in den abhängigen Ansprüchen angegeben.

Die erfindungsgemäße mechanische Lenkungsverriegelung für Fahrzeuge besitzt demnach einen Schließzylinder mit einem Schlüsselkanal, in den in einer Schließstellung ein Schlüssel einsetzbar ist, um den Schließzylinder freizugeben, und der nach der Freigabe von der Schließstellung über mindestens zwei definierte aufeinanderfolgende Drehwinkelbereiche, die jeweils zu einer von mehreren definierten Betriebsstellungen führen, drehbar ist, sowie einen Verriegelungsbolzen, der in der Lenkungsverriegelüng beweglich gelagert ist, um zwischen einer ersten Stellung, in der er in einen Sperrkranz an einer Lenksäule eingreift, um deren Drehung zu verhindern, und einer zweiten Stellung, in der er aus dem Sperrkranz ausgerückt ist, translatorisch bewegt zu werden. Der Verriegelungsbolzen ist mechanisch mit dem Schließzylinder so gekoppelt ist, dass die Drehung des Schließzylinders die Bewegung des Verriegelungsbolzens von der ersten Stellung in die zweite Stellung bewirkt, wobei diese mechanische Koppelung erfindungsgemäß so ausgestaltet ist, dass die Drehung des Schließzylinders über mindestens zwei der definierten Drehwinkelbereiche die Bewegung des Verriegelungsbolzens von, der ersten Stellung in die zweite Stellung bewirkt.

Vorzugsweise entspricht der ersten definierte Drehwinkelbereich einer Drehung des Schließzylinders in eine "ACC"-Stellung und der zweite, sich daran anschließende definierte Drehwinkelbereich entspricht einer Drehung des Schließzylinders in eine "IGN"- oder Fahrstellung.

Bei der erfindungsgemäßen Lenkungsverriegelung wird die Bewegungsstrecke des Verriegelungsbolzens, die durch die mechanische Koppelung von Schließzylinderdrehung und Verriegelungsbolzen, beispielsweise über eine Hub- oder Steuerkurve erreicht wird, anders als im Stand der Technik auf zwei (oder mehr) aufeinanderfolgende definierten Drehwinkelbereiche des Schließzylinders, zwischen denen eine vorgegeben Schließzylinder- bzw. Kontakt- oder Betriebsstellung liegt, verteilt. Der zum Erreichen der Fahrtstellung erforderliche Gesamthub des Verriegelungsbolzens ist damit erst in der zweiten (oder einer weiteren) der aufeinanderfolgenden Betriebsstellungen des Schließzylinders erreicht, wobei diese nicht unbedingt unmittelbar aufeinanderfolgen müssen, sondern beispielsweise durch einen Zwischenbereich getrennt sein können, in dem die Drehung des Schließzylinders keine translatorische Bewegung des Verriegelungsbolzens bewirkt. Indem die Hub- oder Bewegungsstrecke des Verriegelungsbolzens einem größeren Drehwinkelbereich des Schließzylinders zugeordnet ist, kann entweder das zum Drehen erforderliche Moment verringert sein, was den Komfort für den Benutzer erhöht, oder es kann bei etwa gleichbleibendem Drehwinkelbereich des Schließ zylinders und damit ohne Veränderung der definierten Betriebsstellungen des Schließzylinders bei etwa gleichbleibendem Moment oder gleichbleibender Steigung der Steuerkurve ein größerer Gesamthub erzielt werden, so dass der Verriegelungsbolzen auch bei stabiler ausgelegten Lenksäulen mit größerem Durchmesser, insbesondere bei Teleskoplenksäulen, ganz aus dem oder den Rohrsegment(en) der Lenksäule herausgezogen werden kann, ohne dass diese wie im Stand der Technik mit einem Bewegungsschlitz für die Längsbewegung der Rohrsegmente versehen sein müssen.

Die Erfindung nutzt also einen im Stand der Technik bisher "ungenutzten" aber stets vorhanden Drehwinkelbereich des Schließzylinders (typischerweise den von der "ACC"-Stellung in die "IGN"-Stellung) zusätzlich für die Bewegung des Verriegelungsbolzens.

Vorzugsweise wird die mechanischen Koppelung des Verriegelungsbolzens mit dem Schließzylinder zur Bewegung des Verriegelungsbolzens von der ersten in die zweite Stellung über eine Relativdrehung einer Steuerkurve und eines damit in Eingriff befindlichen Mitnehmers erreicht, von denen ein Element drehfest mit dem Verriegelungsbolzen und das andere drehfest mit dem Schließzylinder gekoppelt ist. Die für die Bewegung des Verriegelungsbolzens wirksame Steuerkurve wird dabei über den ersten Drehwinkelbereich hinaus in den zweiten (oder einen weiteren) Drehwinkelbereich verlängert und kann damit flacher geneigt stein, was zu einem niedrigeren Drehmoment führt, oder bei annähernd gleicher Steigung einen größeren Hub bewirken. Die Steigung der Steuerkurve muss dabei über die mindestens zwei (oder mehr) an dem Hub beteiligten Drehwinkelbereiche weder konstant noch kontinuierlich sein, sondern kann abschnittsweise variieren.

Erfindungsgemäß besitzt die Lenkungsverriegelung einen Sicherungsmechanismus mit einem Sicherungselement, das sowohl dem Schließzylinder als auch dem Verriegelungsbolzen mechanisch zugeordnet und in der Lenkungsverriegelung so beweglich gelagert ist, dass es durch Einstecken des Schlüssels in den Schlüsselkanal von einer Freigabestellung in eine Arretierungsstufe bewegt wird, in der es sich in einem mechanischen Eingriff mit dem Verriegelungsbolzen befindet, wenn dieser in der zweiten Stellung ist, und dadurch den Verriegelungsbolzen an einer Rückbewegung in die erste Stellung hindert, solange der Schlüssel sich in dem Schlüsselkanal befindet. Erfindungsgemäß ist dabei die mechanische Zuordnung von Sicherungselement und Verriegelungsbolzen so ausgestaltet, dass das Sicherungselement zwischen der Freigabestellung und der Arretierungsstufe in eine Zwischen-Arretierungsstufe bewegt wird, in der es den Verriegelungsbolzen durch einen mechanischen Eingriff an einer Rückbewegung in die erste Stellung hindert, während sich der Verriegelungsbolzen in einer Position zwischen der ersten und zweiten Position befindet.

Besonders bevorzugt ist diese Zwischen-Arretierungsstufe der ersten der mindestens zwei Betriebsstellungen des Schließzylinders zugeordnet, die nach dem ersten Drehwinkelbereich erreicht ist, während die Arretierungsstufe der zweiten der mindestens zwei Betriebsstellungen des Schließzylinders zugeordnet ist, die nach dem zweiten Drehwinkelbereich erreicht ist. Damit ist die durch das Sicherungselement bewirkte Absicherung des Verriegelungsbolzens bereits bei dem teilweisen Rückzug des Verriegelungsbolzens aus der Lenksäule in der ersten Betriebsstellung gewährleistet. In dieser Stellung, die typischerweise der "ACC"-Stellung des Schließzylinders entspricht, ist der Verriegelungsbolzen vorzugsweise gerade aus dem Sperrkranz ausgerückt und gibt eine Lenkbetätigung frei, der Motor ist aber nicht gestartet, so dass lediglich ein Abschleppen oder Schieben des Fahrzeugs möglich ist. Deshalb ist in der "ACC"-Stellung des Schließzylinders der vollständige Rückzug des Verriegelungsbolzens aus dem oder den Rohrsegment (en) der Lenksäule wie für die Fahrstellung noch nicht erforderlich ist. Die zweistufige Arretierung des Verriegelungsbolzens verbessert die Sicherheit und auch hier das Komfortgefühl für den Benutzer des Fahrzeugs.

Das Sicherungselement ist vorzugsweise wie im beschriebenen Stand der Technik ein Schwenkhebel, der an einer FührungsaAchse beweglich gelagert ist und der über einen Eingriff mit einem in den Schlüsselkanal ragenden beweglichen Erkennungselement, das durch den in den Schlüsselkanal eingesteckten Schlüssel bewegt wird, verschwenkbar ist.

Die Arretierungsstufe und die Zwischen-Arretierungsstufe sind hierbei vorzugsweise durch zwei Ausnehmungsstufen in dem Verriegelungsbolzen oder in einer mechanischen Verlängerung desselben gebildet, in die jeweils eine Rast- oder Eingriffsstufe eines vorzugsweise hakenartigen Endes des Schwenkhebels nacheinander in den mindestens zwei Positionen des Verriegelungsbolzens eingreifen kann, die den Betriebsstellungen des Schließzylinders zugeordnet sind.

Alternativ besitzt der Verriegelungsbolzen oder die mechanische Verlängerung desselben eine Ausnehmung und das Ende des Schwenkhebels besitzt zwei Raststufen, die nacheinander in den mindestens zwei Positionen des Verriegelungsbolzens mit der Ausnehmung in Eingriff gelangen, die den Betriebsstellungen des Schließzylinders zugeordnet sind.

Im Folgenden werden einige exemplarische Ausführungsformen die Erfindung anhand der beigefügten Zeichnung erläutert. Es zeigen:
Fig. 1 eine teilweise freigeschnittene Detailansicht der aus der DE102010038160 A1 bekannten Lenkungsverriegelung,
Fig. 2 isoliert Elemente des Sicherungsmechanismus aus der Lenkungsverriegelung von Fig. 1,
Fig. 3a eine schematische Darstellung einer Abwicklung von Steuerkurven aus einer mechanischen Koppelung von Schließzylinder und Verriegelungsbolzen im Stand der Technik und nach der Erfindung,
Fig. 3b eine schematische Darstellung des Zusammenhangs von Verriegelüngsbolzenstellung und Schließzylinderposition im Stand der Technik und nach der Erfindung,
Fig. 4 eine dem Darstellungsprinzip der Fig. 2 entsprechende schematische Darstellung einer Variante zur Realisierung von zwei Arretierungsstufen zwischen einem Verriegelungsbolzen und einem Sicherungselement, und
Fig. 5 eine dem Darstelungsprinzip der Fig. 2 entsprechende schematische Darstellung einer weiteren Variante zur Realisierung von zwei Arretierungsstufen zwischen einem Verriegelungsbolzen und einem Sicherungselement.

In einer bevorzugten Ausgestaltung basiert die erfindungsgemäße mechanische Lenkungsverriegelung für Fahrzeuge im Hinblick auf seine grundsätzliche mechanische Struktur weitgehend auf der in den Figuren 1 und 2 gezeigten und bereits in der Einleitung unter Bezug auf die DE102010038160 A1 im Detail beschriebenen Lenkungsverriegelung. Eine Beschreibung der grundlegenden Strukturelemente wird daher hier nicht wiederholt und es wird insoweit auf die Ausführungen in der Beschreibungseinleitung verwiesen.

Die erfindungsgemäße Lenkungsverriegelung unterscheidet sich hiervon zum einen in der Struktur der mechanischen Koppelung des Schließzylinders mit dem Verriegelungsbolzen, die dessen Bewegung erzeugt, sowie in der Struktur des Sicherungselements für den Verriegelungsbolzen.

Die Fig. 3a zeigt eine schematische Darstellung einer Abwicklung einer Hub- oder Steuerkurve aus einer mechanischen Koppelung von Schließzylinder und Verriegelungsbolzen im Stand der Technik und nach der Erfindung. Die Abszisse zeigt den Drehwinkel 0 des Schließzylinders und die Ordinate den Hub der Steuerkurve, der die Bewegungsstrecke X des Verriegelungsbolzens bewirkt. Die Kurve C entspricht dabei dem in der Beschreibungseinleitung beschriebenen Stand der Technik, bei dem die gesamte Bewegungsstrecke des Verriegelungsbolzens durch Drehen des Schließzylinders über den Drehwinkelbereich I erreicht wird (von der Schließstellung in die Raststellung der Betriebsstellung 1, die üblicherweise der "ACC"-Stellung entspricht - typischer Winkelbereich: ca. 60°). Im Stand der Technik bewirkt die weitere Drehung des Schließzylinders über die weiteren Drehwinkelbereiche II und III keine weitere Hub- oder Rückzugsbewegung des Verriegelungsbolzens. Der Verriegelungsbolzen ist also im Stand der Technik mit Erreichen der Raststellung 1, bei der der ACC-kontakt hergestellt ist, aus der Verriegelungsstellung U, in der er im Eingriff mit einer Ausnehmung des Sperrkranzes ist, in die vollständig ausgerückte Stellung V zurückgezogen (siehe Fig. 3b).

Die Kurve A in Fig. 3a entspricht einer Variante der Erfindung, bei der die gesamte Rückzug-Bewegungsstrecke des Verriegelungsbolzens bei etwa gleichem Hub X wie bei der Kurve C, aber durch Drehen über die Drehwinkelbereiche I und II des Schließzylinders erreicht wird (von der Schließstellung über die Raststellung 1, die üblicherweise der "ACC"-Stellung entspricht, in die Raststellung 2, die üblicherweise der "IGN"-Stellung entspricht). Die Steigung der Steuerkurve ist hier konstant oder im wesentlichen konstant dargestellt. Die Steigung kann aber in mehreren Teilabschnitten unterschiedlich und jeweils konstant oder ganz oder teilweise progressiv oder degressiv sein.

Die Kurve B entspricht einer Abwandlung der ersten Variante der Erfindung, bei der zwar etwa die selbe Steigung wie bei der Kurve C angewandt wird, die gesamte Bewegungsstrecke des Verriegelungsbolzens aber durch Drehen über die Drehwinkelbereiche I und II des Schließzylinders erreicht wird, so dass in der Raststellung 2 ein erheblich größerer Hub des Verriegelungsbolzens erreicht ist.

Die der Kurve A entsprechenden Variante der Erfindung ermöglicht ein geringeres Drehmoment wie im Stand der Technik, (weshalb die Anwendung bei Kleinwagen bevorzugt ist) und die der Kurve B entsprechende Variante der Erfindung ermöglicht eine größere Bewegungsstrecke des Verriegelungsbolzens (weshalb die Anwendung bei schweren Fahrzeugen mit größer dimensionierter Lenksäule oder einer Teleskoplenksäule bevorzugt ist). Bei der Variante A der Erfindung befindet sich der Verriegelungsbolzen in der Raststellung 1 des Schließzylinders beispielsweise an der Position W und ist damit bereits aus der Ausnehmung des Sperrkranzes ausgerückt, so dass eine Drehung des Lenkrads und ein Schieben oder Rollen des Fahrzeuges bereist möglich ist. In der Raststellung 2 ist der Verriegelungsbolzen dann in der vollständig zurückgezogenen Stellung V wie im Stand der Technik, die der Fahrstellung entspricht. Bei der Variante B der Erfindung befindet sich der Verriegelungsbolzen in der Raststellung 1 des Schließzylinders beispielsweise an der Position V und ist damit bereits in einer Stellung, die der vollständig zurückgezogenen Stellung im Stand der Technik entspricht. In der Raststellung 2 ist der Verriegelungsbolzen bei dieser Variante aber noch weiter zurückgezogen, beispielsweise in die Position Y, in der er dann auch bei Lenksäulen mit großem Durchmesser oder Teleskoplenksäulen vollständig aus der oder den Teleskophülse(n) zurückgezogen ist, so dass diese nicht mit einem Bewegungsschlitz versehen werden müssen.

Weitere Abwandlungen und Kombination von Steigung, Hub und Drehwinkelstufen sind denkbar. Die Drehwinkelbereiche zwischen den definierten Betriebsstellungen des Schließzylinders sind exemplarisch und nicht auf die Winkelangaben beschränkt. Es ist natürlich bevorzugt, die Drehwinkelbereiche des Schließzylinders entsprechend den in der Praxis verwendeten Lenkungsverriegelungen beizubehalten, damit die Gewohnheiten der Benutzer nicht oder nicht wesentlich geändert werden müssen. Eine Vergrößerung der Drehwinkelbereiche über insgesamt 90 bis 120° hinaus ist auch deshalb nicht vorteilhaft, weil ansonsten die Betätigung des Schließzylinders durch den Benutzer über alle Betriebsstellungen nicht mehr aus dem Handgelenk ohne. Umgreifen erreicht werden kann. Allerdings können die Drehwinkelbereiche I und II bei Varianten durchaus vergrößert werden, die auf den dritten Drehwinkelbereich zugunsten eines separaten Startschalters wie einleitend beschrieben verzichten.

Obwohl nicht dargestellt können weitere definierte Rast-oder Betriebsstellungen des Schließzylinders und entsprechende Kontaktstellungen in die mechanische Koppelung von Schließzylinder und Verriegelungsbolzenhub eingeschlossen werden, sofern gewährleistet ist, dass der Verriegelüngsbölzen in der Fahrstellung die Entriegelungs-Endstellung erreicht hat, in der er auch durch das Sicherungselement gesichert ist. Schließlich muss der "aktive" Teil der Steuerkurve und damit die Bewegung des Verriegelungsbolzens nicht wie im Stand der Technik üblich erst kurz vor den definierten Raststellungen enden sondern kann durchaus deutlich vorher beendet sein, um auch bei größeren Toleranzen sicherzustellen, dass der Verriegelungsbolzen sicher ausgerückt und gesichert ist, wenn der jeweilige Kontakt hergestellt ist. Auch die Steigung der Steuerkurve muss innerhalb der jeweiligen Drehwinkelbereiche nicht linear und kontinuierlich sein sondern kann einer beliebigen Bahnkurve folgen. Ferner kann auch der in der Fig. 3a dargestellte dritte Drehwinkelbereich III (zwischen der "IGN"-Stellung und einer "START"-Stellung), der typischerweise zum Starten des Anlassers bzw. des Motors dient und nur kurz betätigt wird, für die Steuerkurve und die translatorische Bewegung des Verriegelungsbolzens genutzt werden.

Der Sicherungsmechanismus für den Verriegelungsbolzen der mechanischen Lenkungsverriegelung in der zurückgezogenen Stellung oder Fahrstellung ist vorzugsweise wie im beschriebenen Stand der Technik gemäß der DE102010038160 A1 ausgestaltet und besitzt ein Sicherungselement das sowohl dem Schließzylinder als auch dem Verriegelungsbolzen mechanisch zugeordnet und in der Lenkungsverriegelung so beweglich gelagert ist dass es durch Einstecken des Schlüssels in den Schlüsselkanal von einer Freigabestellung in eine Arretierungsstufe bewegt wird, in der es sich in einem mechanischen Eingriff mit dem Verriegelungsbolzen befindet, wenn dieser in der zweiten Stellung (der vollständig zurückgezogenen Stellung) ist, und dadurch den Verriegelungsbolzen an einer Rückbewegung in die erste Stellung hindert, solange der Schlüssel sich in dem Schlüsselkanal befindet. Das Sicherungselement kann auch bei der Erfindung beispielsweise als Schwenkhebel 32 ausgestaltet sein, der wie in der Einleitung beschrieben um eine Führungsachse 33 schwenkbar und zusätzlich verschiebbar gelagert ist und der über ein in den Schlüsselkanal 12 ragendes Erkennungselement 14, das mit einem Endabschnitt 34 des Schwenkhebels 32 in Eingriff gelangt, verschwenkbar ist.

Erfindungsgemäß und in Abwandlung des bekannten Sicherungsmechanismus ist die mechanische Zuordnung von. Sicherungselement und Verriegelungsbolzen hierfür nun so ausgestaltet, dass das Sicherungselement zwischen der Freigabestellung und der Arretierungsstufe in eine Zwischen-Arretierungsstufe bewegt werden kann, in der es den Verriegelungsbolzen bereits durch einen mechanischen Eingriff an einer Rückbewegung in die erste Stellung hindert, während sich der Verriegelungsbolzen in einer Position zwischen der Verriegelungsposition und der vollständig zurückgezogenen Position, die der Fahrstellung entspricht, befindet (beispielsweise in der Position W bei Variante A oder der Position V bei Variante B in Fig. 3b). Diese Zwischen-Arretierungsstufe ist vorzugsweise der ersten der mindestens zwei Rast- oder Betriebsstellungen des Schließzylinders zugeordnet, die nach dem ersten Drehwinkelbereich erreicht ist (typischerweise die "ACC"-Stellung), während die der vollständig zurückgezogenen Stellung des Verriegelungsbolzens in Fahrstellung entsprechende Arretierungsstufe der zweiten der mindestens zwei Rast- oder Betriebsstellungen des Schließzylinders zugeordnet, ist, die nach dem zweiten Drehwinkelbereich erreicht ist (typischerweise die "IGN"-Stellung). Damit ist die durch das Sicherungselement bewirkte Absicherung des Verriegelungsbolzens bereits bei dem teilweisen Rückzug des Verriegelungsbolzens aus der Lenksäule in der ersten Betriebsstellung gewährleistet.

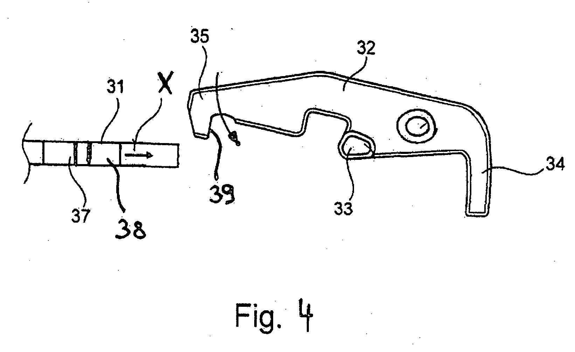

Gemäß der in der Figur 4 dargestellten Variante umfassen die beiden Arretierungsstufen zwei aufeinanderfolgende Ausnehmungen 37 und 38 in dem Verriegelungsbolzen oder in einer mechanischen Verlängerung 31 desselben, in die jeweils eine Rast- oder Eingriffsstufe: 39 des vorzugsweise hakenartigen Endes 35 des Schwenkhebels 32 nacheinander bei der Rückzugbewegung des Verriegelungsbolzens in Richtung X in zwei Positionen des Verriegelungsbolzens eingreifen kann, die vorzugsweise den Betriebsstellungen des Schließzylinders zugeordnet sind.

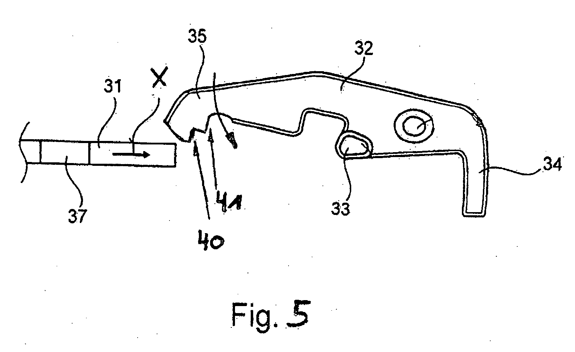

Gemäß der in der Figur 5 dargestellten weiteren Variante umfassen die beiden Arretierungsstufen zwei aufeinanderfolgende und versetzte Raststufen 40 und 41, die an dem Endbereich 35 des Schwenkhebels 32 so vorgesehen sind, dass sie nacheinander bei der Rückzugbewegung des Verriegelungsbolzens oder der mechanischen Verlängerung 31 desselben in Richtung X in eine darin ausgebildete Ausnehmung 37 eingreifen.

Selbstverständlich können bei beiden Varianten auch mehr als zwei Arretierungsstufen in der entsprechenden Art zwischen dem Verriegelungsbolzen oder der mechanischen Verlängerung 31 desselben und dem Sicherungselement vorgesehen sein. Auch eine Kombination beider Prinzipien (mehrere Ausnehmungen im Verriegelungsbolzen und mehrere Raststufen am Schwenkhebel) sowie eine Vertauschung zwischen den Elementen (Raststufen, am Verriegelungsbolzen und Ausnehmung am Schwenkhebel) ist denkbar.

Die Freigabe der Arretierungsstufen erfolgt wie im Stand der Technik dadurch, dass der Schließzylinders in die Ausgangs- oder Verriegelungsstellung zurückgedreht wird und der Schlüssel aus dem Schlüsselkanal 12 herausgezogen wird. Der durch die. Feder 30 vorbelastete Schwenkhebel 32 drückt bzw. schwenkt dann das nicht mehr durch den .Schlüssel blockierte Erkennungselement 14 mit seinem Endabschnitt 34 in den Schlüsselkanal und bringt das der Führungsachse 33 gegenüberliegende Ende 35 des Schwenkhebels 32 außer Eingriff mit der oder den Arretierungsstufe (n), so dass sich der selbst in die Verriegelungsstellung vorbelastete Verriegelungsbolzen in den Eingriff mit dem Sperrkranz bewegen kann.

Die erfindungsgemäße Idee ist nicht auf eine Realisierung in der beschriebenen Lenkungsverriegelung beschränkt sondern kann auf andere Bauarten von Lenkungsverriegelungen angewandt werden, sofern diese eine mechanische Koppelung des Schließzylinders mit dem Verriegelungsbolzen zum Bewegen desselben in Abhängigkeit von der Drehung des Schließzylinders bzw. eines Zylinderkerns aufweisen..

Außerdem ist auch die erfindungsgemäße Idee der mehreren Arretierungsstufen nicht auf eine Anwendung bei dem beschriebenen Sicherungsmechanismus mit dem Schwenkhebel beschränkt, sondern kann auf andere mechanische Sicherungsmechanismen angewandt werden. Im übrigen ist auch eine Anwendung der Idee der mehreren Arretierungsstufen zwischen dem Verriegelungsbolzen und dem Sicherungselement des Sicherungsmechanismus ohne die mechanische Koppelung des Schließzylinders mit dem Verriegelungsbolzen zum Bewegen desselben in Abhängigkeit von der Drehung des Schließzylinders über mehrere definierte Drehwinkelbereiche bzw. Schließzylinder-Betriebsstellungen im Rahmen der Erfindung möglich.

## Patentansprüche

1. Eine mechanische Lenkungsverriegelung für Fahrzeuge, mit
einem Schließzylinder (10) mit einem Schlüsselkanal (12), in den in einer Schließstellung ein Schlüssel einsetzbar ist, um den Schließzylinder (10) freizugeben, und der nach Freigabe von der Schließstellung über mindestens zwei definierte Drehwinkelbereiche (I,II,III), die jeweils zu einer von mehreren definierten Betriebsstellungen (1,2) führen, drehbar ist,
einem Verriegelungsbolzen, der in der Lenkungsverriegelung beweglich gelagert ist, um zwischen einer ersten Stellung, in der er in einen Sperrkranz an einer Lenksäule eingreift, um deren Drehung zu verhindern, und einer zweiten Stellung, in der er vollständig aus dem Sperrkranz ausgerückt ist, translatorisch bewegt zu werden,
wobei der Verriegelungsbolzen mechanisch mit dem Schließzylinder (10) so gekoppelt ist, dass die Drehung des Schließzylinders (10) über mindestens zwei der definierten Drehwinkelbereiche (I,II,III) die Bewegung des Verriegelungsbolzens von der ersten Stellung in die zweite Stellung bewirkt, und
einem Sicherungsmechanismus für den Verriegelungsbolzen,
wobei der Sicherungsmechanismus ein Sicherungselement (32) aufweist, das sowohl dem Schließzylinder (10) als auch dem Verriegelungsbolzen mechanisch zugeordnet und in der Lenkungsverriegelung so beweglich gelagert ist, dass es durch Einstecken des Schlüssels in den Schlüsselkanal (12) von einer Freigabestellung in eine Arretierungsstufe bewegbar ist, in der es sich in einem mechanischen Eingriff mit dem Verriegelungsbolzen befindet, wenn dieser in der zweiten Stellung ist, und dadurch den Verriegelungsbolzen an einer Rückbewegung in die erste Stellung hindert, solange der Schlüssel sich in dem Schlüsselkanal (12) befindet, und
wobei die mechanische Zuordnung von Sicherungselement (32) und Verriegelungsbolzen so ausgestaltet ist, dass das Sicherungselement zwischen der Freigabestellung und der Arretierungsstufe in eine Zwischen-Arretierungsstufe bewegbar ist, in der es den Verriegelungsbolzen durch einen mechanischen Eingriff an einer Rückbewegung in die erste Stellung hindert, während sich der Verriegelungsbolzen in einer Position zwischen der ersten und zweiten Position befindet.

2. Die mechanische Lenkungsverriegelung gemäß Anspruch 1, wobei eine erste der definierten Betriebsstellungen (1,2) des Schließzylinders (10) einer "ACC"-Stellung und eine zweite der definierten Betriebsstellungen (1,2) einer "IGN"- oder Fahrstellung entspricht.

3. Die mechanische Lenkungsverriegelung gemäß Anspruch 1 oder 2, wobei die mechanische Koppelung des Verriegelungsbolzens mit dem Schließzylinder (10) zur Bewegung des Verriegelungsbolzens von der ersten in die zweite Stellung eine Steuerkurve (13,13a) und einen damit in Eingriff befindlichen Mitnehmer aufweist, die relativ zueinander beweglich sind und von denen ein Element drehfest mit dem Verriegelungsbolzen und das andere drehfest mit dem Schließzylinder (10) gekoppelt ist.

4. Die mechanische Lenkungsverriegelung gemäß Anspruch 2 oder 3, wobei der Verriegelungsbolzen mechanisch mit dem Schließzylinder (10) so gekoppelt ist, dass der Verriegelungsbolzen in der ersten der definierten Betriebsstellungen (1,2) aus dem Sperrkranz ausgerückt ist aber in ein Rohrsegment der Lenksäule vorsteht.

5. Die mechanische Lenkungsverriegelung gemäß Anspruch 4, wobei der Verriegelungsbolzen mechanisch mit dem Schließzylinder (10) so gekoppelt ist, dass der Verriegelungsbolzen in der zweiten der definierten Betriebsstellungen (1,2) aus dem Rohrsegment der Lenksäule ausgerückt ist.

6. Die mechanische Lenkungsverriegelung gemäß einem der Ansprüche 1 bis 5, wobei die Zwischen-Arretierungsstufe der ersten der mindestens zwei definierten Betriebsstellungen (1,2) des Schließzylinders (10) zugeordnet ist, und die Arretierungsstufe der zweiten der mindestens zwei definierten Betriebsstellungen (1,2) des Schließzylinders (10) zugeordnet ist.

7. Die mechanische Lenkungsverriegelung gemäß einem der Ansprüche 1 bis 6, wobei das Sicherungselement ein Schwenkhebel (32) ist, der an einer Führungsachse (33) beweglich gelagert ist und über einen Eingriff mit einem in den Schlüsselkanal (12) ragenden beweglichen Erkennungselement (14) verschwenkbar ist.

8. Die mechanische Lenkungsverriegelung gemäß einem der Ansprüche 1 bis 7, wobei die Arretierungsstufe und/oder die Zwischen-Arretierungsstufe jeweils eine Ausnehmung (37,38) in dem Verriegelungsbolzen oder in einer mechanischen Verlängerung (31) desselben aufweist/aufweisen, in die nacheinander eine Rast- oder Eingriffsstufe (39) an einem Endbereich (35) des Schwenkhebels (32) eingreifen kann.

9. Die mechanische Lenkungsverriegelung gemäß einem der Ansprüche 1 bis 8, wobei die Arretierungsstufe und/oder die Zwischen-Arretierungsstufe jeweils eine Raststufe (40,41) an einem/dem Endbereich (35) des Schwenkhebels (32) aufweist, die nacheinander mit einer Ausnehmung (37) in dem Verriegelungsbolzen oder der mechanischen Verlängerung (31) desselben in Eingriff treten können.

## Claims

1. Mechanical steering lock for vehicles, comprising
a lock cylinder (10) which has a keyway (12), in which a key can be inserted in a locked position in order to release the lock cylinder (10), and which, after being released from the locked position, can be rotated through at least two defined rotation angle ranges (I, II, III) which each lead to one of a plurality of defined operating positions (1, 2),
a locking bolt which is movably mounted in the steering lock in order to be translationally moved between a first position, in which said bolt engages in a ratchet wheel on a steering column in order to prevent the rotation of said column, and a second position, in which said bolt is completely disengaged from the ratchet wheel,
wherein the locking bolt is mechanically coupled to the lock cylinder (10) such that the rotation of the lock cylinder (10) through at least two of the defined rotation angle ranges (I, II, III) moves the locking bolt from the first position into the second position, and
a securing mechanism for the locking bolt,
wherein the securing mechanism comprises a securing element (32) which is mechanically associated with both the lock cylinder (10) and the locking bolt and is movably mounted in the steering lock such that said securing mechanism can be moved from a release position into a detent step by inserting the key in the keyway (12), in which detent step said locking mechanism is in mechanical engagement with the locking bolt when said bolt is in the second position, and thus prevents the locking bolt from moving back into the first position as long as the key is in the keyway (12), and
wherein the mechanical association of securing element (32) and locking bolt is designed such that the securing element can be moved between the release position and the detent step into an intermediate detent step, in which said element prevents the locking bolt from moving back into the first position by means of mechanical engagement while the locking bolt is in a position between the first and second positions.

2. Mechanical steering lock according to claim 1, wherein a first of the defined operating positions (1, 2) of the lock cylinder (10) corresponds to an "ACC" position and a second of the defined operating positions (1, 2) corresponds to an "IGN" or driving position.

3. Mechanical steering lock according to either claim 1 or claim 2, wherein the mechanical coupling of the locking bolt to the lock cylinder (10) comprises a radial cam (13, 13a) and a follower which is in engagement therewith for moving the locking bolt from the first into the second position, which cam and follower can be moved relative to one another and of which one element is coupled to the locking bolt for conjoint rotation and the other element is coupled to the lock cylinder (10) for conjoint rotation.

4. Mechanical steering lock according to either claim 2 or claim 3, wherein the locking bolt is mechanically coupled to the lock cylinder (10) such that, in the first of the defined operating positions (1, 2), the locking bolt is disengaged from the ratchet wheel but protrudes into a tube segment of the steering, column.

5. Mechanical steering lock according to claim 4, wherein the locking bolt is mechanically coupled to the lock cylinder (10) such that, in the second of the defined operating positions (1, 2), the locking bolt is disengaged from the tube segment of the steering column.

6. Mechanical steering lock according to any of claims 1 to 5, wherein the intermediate detent step is associated with the first of the at least two defined operating positions (1, 2) of the lock cylinder (10), and the detent step is associated with the second of the at least two defined operating positions (1, 2) of the lock cylinder (10).

7. Mechanical steering lock according to any of claims 1 to 6, wherein the securing element is a pivot lever (32) which is movably mounted on a guide axle (33) and can be pivoted by engagement in a movable detection element (14) which projects into the keyway (12).

8. Mechanical steering lock according to any of claims 1 to 7, wherein the detent step and/or the intermediate detent step each comprises/comprise a recess (37, 38) in the locking bolt or in a mechanical extension (31) thereof, in which a catching step or engagement step (39) can engage successively with an end region (35) of the pivot lever (32).

9. Mechanical steering lock according to any of claims 1 to 8, wherein the detent step and/or the intermediate detent step each comprises a catching step (40, 41) at an/the end region (35) of the pivot lever (32), which catching steps can engage successively in a recess (37) in the locking bolt or in the mechanical extension (31) thereof.

## Revendications

1. Verrouillage mécanique de direction pour des véhicules, comprenant
un cylindre (10) de serrure ayant un passage (12) de clé dans lequel, dans une position de fermeture, une clé peut être insérée pour libérer le cylindre (10) de serrure et qui, après libération de la position de fermeture, peut tourner sur au moins deux plages (I, II, III) angulaires de rotation définies, qui conduisent respectivement à l'une de plusieurs positions (1, 2) définies de fonctionnement,
un axe de verrouillage, qui est monté mobile dans le verrouillage de direction pour être déplacé en translation entre une première position, dans laquelle il pénètre dans une couronne de blocage sur une colonne de direction pour en empêcher la rotation, et une deuxième position, dans laquelle il est désenclenché complètement de la couronne de blocage,
dans lequel l'axe de verrouillage est accouplé mécaniquement au cylindre (10) de serrure de manière à ce que la rotation du cylindre (10) de serrure sur au moins deux des plages (I, II, III) angulaires de rotation définies provoque le passage de l'axe de verrouillage de la première position à la deuxième position et
un mécanisme de sécurité pour l'axe de verrouillage,
dans lequel le mécanisme de sécurité a un élément (32) de sécurité, qui est associé mécaniquement à la fois au cylindre (10) de serrure et à l'axe de verrouillage et qui est monté mobile dans le verrouillage de direction de manière à pouvoir venir, lorsque la clé est mise dans le passage (12) de clé, d'une position de libération à un cran d'arrêt, dans lequel il se trouve en prise mécanique avec l'axe de verrouillage, lorsque celui-ci est dans une deuxième position et empêche ainsi l'axe de verrouillage de revenir dans la première position tant que la clé se trouve dans le passage (12) de clé et
dans lequel l'association mécanique de l'élément (32) de sécurité et de l'axe de verrouillage est conformée de manière à pouvoir faire venir l'élément de sécurité entre la position de libération et le cran d'arrêt dans un cran d'arrêt intermédiaire, dans lequel il empêche l'axe de verrouillage par prise mécanique de revenir dans la première position, tandis que l'axe de verrouillage se trouve dans une position entre la première et la deuxième position.

2. Verrouillage mécanique de direction suivant la revendication 1, dans lequel une première des positions (1, 2) définies de fonctionnement du cylindre (10) de serrure correspond à une position « ACC » et une deuxième des positions (1, 2) de fonctionnement à une position « IGN » ou de marche.

3. Verrouillage mécanique de direction suivant la revendication 1 ou 2, dans lequel l'accouplement mécanique de l'axe de verrouillage au cylindre (10) de serrure pour faire passer l'axe de verrouillage de la première à la deuxième position comporte une came (13, 13a) de commande et un entraîneur en prise avec elle, qui sont mobiles l'un par rapport à l'autre et dont un élément est solidaire en rotation de l'axe de verrouillage et l'autre solidaire en rotation du cylindre (10) de serrure.

4. Verrouillage mécanique de direction suivant la revendication 2 ou 3, dans lequel l'axe de verrouillage est accouplé mécaniquement au cylindre (10) de serrure de manière à ce que l'axe de verrouillage soit dans la première des positions (1, 2) définies de fonctionnement désenclenché de la couronne de blocage, mais soit en saillie d'un segment tubulaire de la colonne de direction.

5. Verrouillage mécanique de direction suivant la revendication 4, dans lequel l'axe de verrouillage est accouplé mécaniquement au cylindre (10) de serrure, de manière à ce que l'axe de verrouillage soit, dans la deuxième des positions (1, 2) définies de fonctionnement, désenclenché du segment tubulaire de la colonne de direction.

6. Verrouillage mécanique de direction suivant l'une des revendications 1 à 5, dans lequel le cran d'arrêt intermédiaire est affecté à la première des au moins deux positions (1, 2) définies de fonctionnement du cylindre (10) de serrure et le cran d'arrêt est affecté à la deuxième des au moins deux positions (1, 2) définies de fonctionnement du cylindre (10) de serrure.

7. Verrouillage mécanique de direction suivant l'une des revendications 1 à 6, dans lequel l'élément de sécurité est un levier (32) pivotant, qui est monté mobile sur un axe (33) de guidage et qui peut pivoter par une prise avec un élément (14) de reconnaissance mobile pénétrant dans le passage (12) de clé.

8. Verrouillage mécanique de direction suivant l'une des revendications 1 à 7, dans lequel le cran d'arrêt et/ou le cran d'arrêt intermédiaire a/ont respectivement un évidement (37, 38) dans l'axe de verrouillage ou dans un prolongement (31) mécanique de celui-ci, dans lequel successivement un cran (39) d'encliquetage ou de pénétration peut pénétrer sur une partie (35) d'extrémité du levier (32) pivotant.

9. Verrouillage mécanique de direction suivant l'une des revendications 1 à 8, dans lequel le cran d'arrêt et/ou le cran d'arrêt intermédiaire a respectivement un cran (40, 41) d'encliquetage sur une/la partie (35) d'extrémité du levier (32) pivotant, qui peuvent entrer en prise successivement avec un évidement (37) dans l'axe de verrouillage ou dans le prolongement (31) mécanique de celui-ci.
